# EUROPEAN PATENT APPLICATION

(11) **EP 1 978 741 A1**
(43) Date of publication of application: **08.10.2008**
(21) Application number: 07119129.0
(22) Date of filing: 24.10.2007
(51) Int. Cl.: H04N 7/24, H04N 5/445, H04N 5/45

(54) **Video data display system and method for mobile terminal**

(30) Priority: 03.04.2007 KR 20070032673
(71) Applicant: Samsung Electronics Co., Ltd., Suwon-si, Gyeonggi-Do (KR)
(72) Inventor: Jung, Young Jun, Gyeonggi-do (KR); Seo, Jeong Wook, Gyeonggi-do (KR); Lyou, Hak Sung, Gyeonggi-do (KR)
(74) Representative: Grünecker, Kinkeldey, Stockmair & Schwanhäusser Anwaltssozietät

(57) **Abstract**

A video data display system and method for a mobile terminal that enable capturing video data of a predetermined length and displaying the captured video data in multiple windows on a single display screen. The video data may be presented as a slide show. The video data display method includes capturing an object video data of an audiovisual data stream displayed on a screen; dividing the object video data into a predetermined number of pictures; and displaying the pictures in different windows of the screen.

## Description

### CLAIM OF PRIORITY

This application claims priority from an application entitled "VIDEO DATA DISPLAY SYSTEM AND METHOD FOR MOBILE TERMINAL" filed in the Korean Intellectual Property Office on April 3, 2007 and assigned Serial No. 2007-0032673, the contents of which are incorporated herein by reference in its entirety.

### BACKGROUND OF THE INVENTION

### Field of the Invention

The present invention relates to a video data display for a mobile terminal. More particularly, the present invention relates to a video data display system and method for a mobile terminal that enables display of captured video data in multiple windows on a single display screen.

### Description of the Related Art

A digital broadcast receiver is an apparatus that receives a modulated broadcast signal transmitted by a broadcast station and restores original digital data from the received broadcast signal. The digital data are coded and modulated on a carrier wave so as to be broadcast in the form of a broadcast signal by the broadcast station. The digital broadcast receiver demodulates and decodes the broadcast signal in order to restore/reconstruct a display of the original digital data. Accordingly, the digital broadcast receiver is provided with a tuner, a demodulator, and a decoder.

Recent digital broadcast systems are classified into a digital multimedia broadcast (DMB) system and a digital video broadcasting (DVB) system. These digital broadcast systems provide a plurality of service channels within a frequency bandwidth and each service channel is structured with multiplexed sub-channels of video, audio, and program information data.

Current mobile terminals tend to handle enhanced multimedia playback function by using a dedicated multimedia processor, particularly for a digital broadcast playback function.

A dedicated digital broadcast receiver, or a mobile terminal equipped with a digital broadcast module, receives various program-related data together with audio and video data, and these data are processed by corresponding decoders. The program-related data may include, for example, an Electronic Program Guide (EPG) for Digital Multimedia Broadcasting (DMB), or an Electronic Service Guide (ESG) for Digital Video Broadcast-Handheld (DVB-H). The ESG can include program information and other supplementary information provided by broadcasting stations or service providers.

Typically, the received broadcast data are displayed on a single screen of a display panel. That is, the broadcast receiver can only display a video stream of a single service channel at a time. Accordingly, the ongoing playback needs to be halted in order to check a program on another channel. To mitigate such cumbersome blind channel switching, a picture-in-picture technique has been proposed. With the picture-in-picture technique, one program is displayed on the entire display screen, and another program or programs are displayed in individual smaller windows on the display screen.

However, at best, most conventional channel display techniques have focused displaying multiple channels at a time but not on providing channel editing and correction functions. For this reason, there has been a need for innovative video data editing methods for satisfying various user requirements.

### SUMMARY OF THE INVENTION

The present invention has been made in part in an effort to solve at least some of the above-mentioned problems.The present invention provides a video data display system and method for a mobile terminal that are capable of capturing a video stream and displaying, in real time, the captured video stream in the form of a slide show in multiple windows on a single screen.

In accordance with an exemplary aspect of the present invention, the above and other objects are accomplished by a video data display method that includes capturing an object video data of an audiovisual data stream displayed on a screen; dividing the object video data into a predetermined number of pictures; and displaying the pictures in different windows of the screen.

In accordance with another exemplary aspect of the present invention, the above and other objects are accomplished by a video data display system for a mobile terminal that includes a display unit having a screen; a control unit for capturing an object video data from an audiovisual data stream, dividing the object video data into a predetermined number of pictures, and displaying the pictures in different windows of the screen; and a key input unit for generating a command for capturing the object video data.

In accordance with another exemplary aspect of the present invention, the above and other objects are accomplished by a mobile terminal that includes a capturer for capturing an object video data from a video stream displaying on a screen; a divider for dividing the object video data into a predetermined number of pictures; and display for displaying the pictures in different windows provided on a screen.

### BRIEF DESCRIPTION OF THE DRAWINGS

Examples of the above and other objects, features and advantages of the present invention will be more apparent from the following detailed description in conjunction with the accompanying drawings, in which:
FIG. 1 is a block diagram illustrating a configuration of a mobile terminal adopted for a video data display system according to an exemplary embodiment of the present invention;
FIG. 2 is a diagram illustrating menu screens provided for selecting a sub-mode of a single-screen multi-window display mode of a video data display system according to an exemplary embodiment of the present invention;
FIG. 3 is a diagram illustrating a step of storing multi-window video data of a video data display method according to an exemplary embodiment of the present invention;
FIG. 4 is a screen image illustrating a single-screen multi-window display mode of a video data display system according to an exemplary embodiment of the present invention;
FIG. 5 is a screen image illustrating a single-screen multi-window display mode of a video data display system according to another exemplary embodiment of the present invention;
FIG. 6 is a flowchart illustrating a video data display method according to yet another exemplary embodiment of the present invention;
FIG. 7 is a flowchart illustrating a video data display method according to still another exemplary embodiment of the present invention; and
FIG. 8 is a flowchart illustrating a video data display method according to another exemplary embodiment of the present invention.

### DETAILED DESCRIPTION OF THE INVENTION

Exemplary embodiments of the present invention are described with reference to the accompanying drawings in detail. The same reference numbers are used throughout the drawings to refer to the same or like parts. Detailed descriptions of well-known functions and structures incorporated herein may be omitted to avoid obscuring the subject matter of the present invention with description of such well-known functions and structures.

In addition, certain terminologies are used in the following description for convenience and reference only and the claimed invention is not limited by these terms. In the following detailed description, the exemplary embodiments of the invention have been shown and described, simply by way of illustration of the best mode contemplated by the inventor(s) of carrying out the invention. As will be realized, a person or ordinary skill in the art appreciates that the invention is capable of modification in various manners, all without departing from the spirit of the invention and the scope of the appended claims. Accordingly, the drawings and description are to be regarded as illustrative in nature and not restrictive.

In the following exemplary embodiment, a mobile terminal comprises a dedicated digital broadcast receiver or a device integrated with a digital broadcast receiver that is capable of receiving and playing a broadcast video stream, which may include buffering and storing the received video stream, and displaying the video stream in multiple windows constituting a screen.

The mobile terminal may comprise, for example,a cellular phone, a Personal Digital Assistant (PDA), a laptop computer, a Smartphone, a 3^{rd} generation standard mobile terminal, a Code Division Multiple Access (CDMA) terminal, a Global System for mobile communication (GSM) terminal, a Global Packet Radio Services (GPRS) terminal, a Wireless Local Area Network (WLAN) terminal, a Wireless Broadband (WiBro) Terminal, and a High Speed Downlink Packet Access (HSDPA) terminal, and their equivalents equipped with a digital broadcast receiver module.

The video data display system and method of the present invention can be adopted to operate in an S-DMB, T-DMB, DVB-T, DVB-H, and/or other equivalent digital broadcast system.

In the following exemplary embodiments, the term "broadcast data" denotes information or signals including multimedia broadcasts, video and/or audio data. The broadcast data is decoded to be output as the video and audio data such that the video data are output through a display in the form of a visual format and the audio data are output through a speaker in the form of an audible sound wave. In the following embodiments, the video data display system and method of the present invention are described mainly with the video data on playback. On playback of the broadcast stream, the video data of the broadcast stream are displayed in a single-screen multi-window format in the form of, for example a slide show.

In order to assist with understanding the present invention, the video data display system and method can be operated for the purpose of training for various sports such as viewing a video clip having a content of an expert golfer, or to study techniques in baseball, swimming, and/or taekwondo, etc. just to name a few possibilities. The application of the video data display system and method is not limited to the contents of the video data, and the aforementioned are disclosed only to aide in understanding the invention.

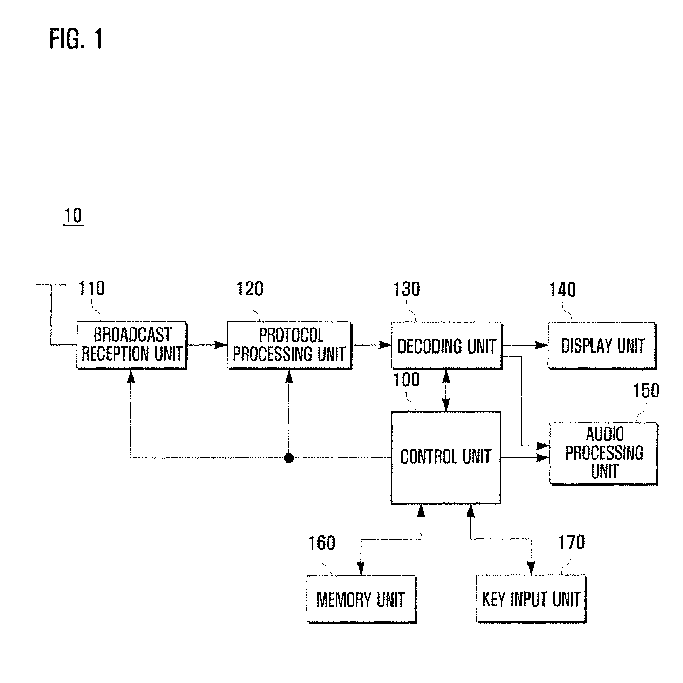

FIG. 1 is a block diagram illustrating a configuration of a mobile terminal adopted for a video data display system according to an exemplary embodiment of the present invention.

Referring to FIG. 1, the mobile terminal includes a broadcast reception unit 110, a protocol processing unit 120, a decoding unit 130, a display unit 140, an audio processing unit 150, a memory unit 160, a key input unit 170, and a control unit 100.

The key input unit 170 generates an instruction in response to a key selection. The instruction can include a channel selection command and a program playback command. Particularly, the key input unit 170 is configured so as to generate an instruction for switching a display mode to a single-screen multi-window display mode in response to a predetermined key input. The key input unit 170 is configured to generate commands to start recording of a video stream in accordance with a preset recording scheme, storing the recorded video data as a video file, and selecting one of the recorded video files.

The memory unit 160 is provided with both a program memory for storing application programs and a data memory for storing the application data produced while the application programs are executed. Particularly, the program memory stores the application program for performing the single-screen multi-window display method of the present invention. The data memory of memory unit 160 can be provided with a captured video storage region for storing the video data captured by the mobile terminal 10. The captured video storage region can be implemented independently.

Still referring to FIG. 1, the broadcast reception unit 110 receives a video stream of a service channel selected by a user. In addition, the protocol processing unit 120 performs protocol processing on the service channel for separately extracting audio, video, and program data from the service channel. The program data includes data such as ESG or EPG data. The protocol processing unit 120 compresses the program data and stores the compressed program data in the memory unit 160 under the control of the control unit 100. The protocol processing unit 120 delivers the video data to the display unit 140 and the audio data to the audio processing unit 150.

The decoding unit 130 includes an audio decoder and a video decoder. The audio decoder decodes the audio data and outputs the decoded audio data to the audio processing unit 150, and the video decoder decodes the video data and outputs the decoded video data to the display unit 140.

The display unit 140 displays the video data output by the decoding unit 130 together with the broadcast data. The video data display procedure is described later in more detail.

The control unit 100 controls general operations of the mobile terminal 10. If a command for entering a single-screen multi-window display mode is detected while the mobile terminal 10 operates in a broadcast playback mode, the control unit 100 captures the video data from the video stream of the ongoing playback service channel in a predetermined length, divides the captured video data into a predetermined number of sections, and displays the sections in a plurality of windows, independently, provided on a single screen of the display unit 140.

For example, in the single-screen multi-window display mode, the video data are displayed in the form of a slide show. The control unit 100 controls the operations such that the video sections are displayed in respective windows of the screen, whereby a user can comparatively watch a variation of the motion in the video data in the temporal order.

For example, if a user wants to analyze a golf swing of a golfer while watching a golf channel, the single-screen multi-window display mode can be useful because it shows portions of the swing in temporal order, so as to permit careful study of the entire swing. Assuming that the single-screen multi-window display mode is activated immediately prior to the golfer starting his/her swing, the control unit 100 captures the video data representing the swing motion of the golfer by frame(s) or sections and displays the frame(s) or sections in the multiple windows of the screen in a discrete temporal order such that the user can watch the swing motion of the golfer in a posture-by-posture manner. The video data displayed in each window can be a still image or a video clip having a predetermined length. Also, the video data presentation can be controlled by window such that each window can display a still picture or a motion picture independently. Accordingly, the display unit 140 can be controlled to display the video data of the ongoing playback service channel in a window while the recorded video data is being displayed in the other windows of the screen.

According to an exemplary aspect of the invention, the video stream may be divided into frames or sections according to user-specified display mode settings. For example, if the single-screen multi-window display mode is set to a "division by frame" option, the video stream is divided and displayed by frame. However, if the single-screen multi-window display mode is set to a "division by section" option, the video stream is divided and displayed by section. The divided section may comprise, for example, a predetermined number of frames.

In the meantime, the video data are composed of Intra (I)-frames, which contain all the information necessary to reconstruct a picture, Predicted (P)-frames and/or Bi-predictive (B)-frames coded with reference to other frames (such as I-frames). The control unit 100 can divide the video data in a unit comprising an I-frame, or an accumulation of a plurality of P frames that is close to a complete I-frame.

In the case where the single-screen multi-window display mode is set with the division-by-section option, the control unit 100 typically divides the video data buffered in the captured video storage into a plurality of sections, with each section having a predetermined length in time. The sections are displayed in the respective windows of the screen. The length of each section is preset by a value or determined by dividing the total length of the captured video data into the number of windows on the screen. The sections can be processed so as to be partially overlapped with each other so as to smoothly display the sections in the corresponding windows in the form of a slide show.

Still referring to FIG. 1, the key input unit 170, for example, may be provided with a hot key to facilitate switching between one or more various display modes and a single-screen multi-window display mode. For example, when the hot key is pressed, the control unit 100 may start capturing the video data in response, and may stop capturing the video data in response to a subsequent press of the hot key. A person of ordinary skill in the art understands and appreciates that the keys may comprise any of a number or different types of keys, including a physical key button, a touch screen portion of the display, etc., and the hot key may comprise a dedicated key or can be a function activated by pressing/activating a combination of keys, etc.

Although the video data display system operates in a processing order of capturing a length of video data, storing the captured video data, dividing the stored data into a plurality of processing units, and displays the video data by the processing unit in multiple windows of a single screen, the present invention is not limited thereto. For example, the video data display system can be implemented in conjunction with a time-shift playback function and a recorded playback function as well as a real time playback function. It is even possible that the windows could be displayed in reverse sequence, if desired. The present invention also may include a pause or "freeze-frame" feature so that during the slide show, the user may stop the sequence to study a particular portion of vide data being displayed.

In a case where the time-shift playback function is activated, the control unit 100 performs background recording of a live broadcast stream such that the user can replay certain scenes.

For example, the control unit 100 may perform the single-screen multi window display using the video data recorded by the time-shift function. The length of the video data to be displayed in the single-screen multi-window display mode can be selected by the user. Additionally, the start and end positions of the video data to be displayed in the single-screen multi-window display mode can be selected for times in the near future, as well as for the past times.

In order to perform the background recording for the time-shift function, the mobile phone may include additional storage. Also, the memory unit 160 can be implemented for storing the recorded video data. Also, the background recording storage can be provided in the form of a buffer installed in the display unit 140.

In a case where the recorded playback function is activated, the control unit 100 determines whether previously recorded video data exists in the memory unit 160 in response to a user command. If there exists a recorded video data, the control unit 100 plays the recorded video data such that the user selects the start and end positions of the video stream to be processed for the single-screen multi-window display mode. The video data selected in such manner is processed so as to be displayed in the multiple windows in the form of a slide show.

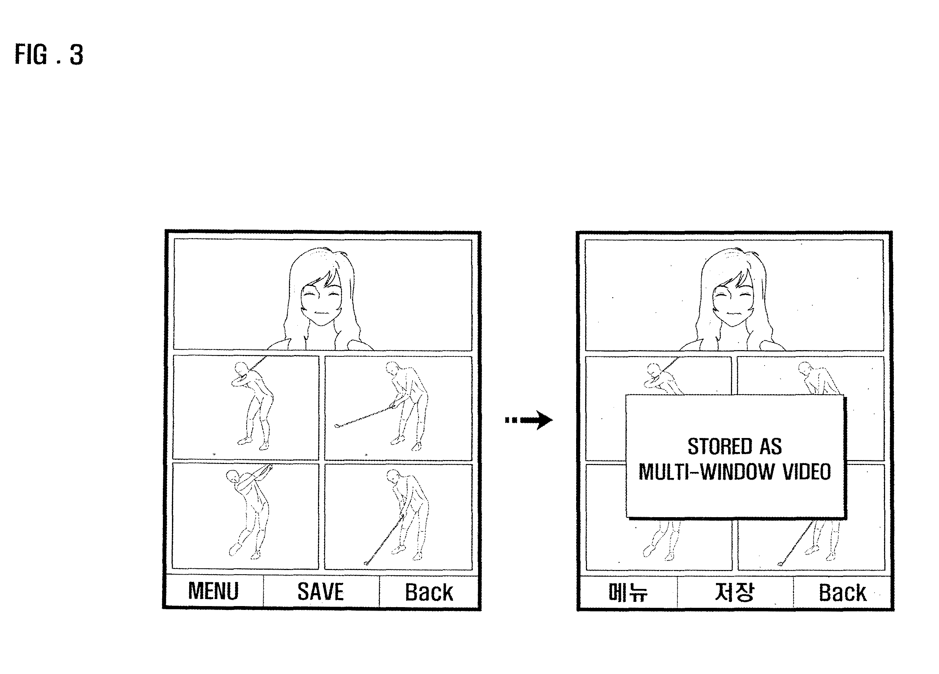

According to an exemplary aspect of the present invention, while the video data are displayed in the single-screen multi-window display mode, the video data can be store as it is displayed on the screen (See FIG. 3). That is, if a key input for storing the video data is detected while displaying the video data in the single-screen multi-mode display mode, the control unit 100 controls to store the video streams in the multiple windows as a single-screen video data.

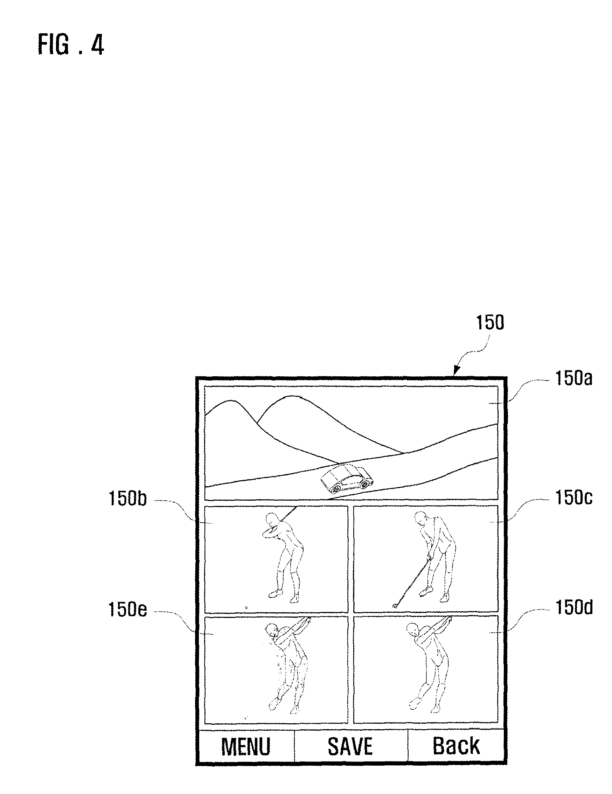

FIG. 4 is a screen image illustrating a single-screen multi-window display mode of a video data display system according to an exemplary embodiment of the present invention.

As shown in the example in FIG. 4, a screen 150 is composed of 5 windows for display in a single-screen multi-window display mode. However, it is to be understood that the number of the windows is not limited to 5, as this number was chosen merely for illustrative purposes. For example, the screen of the single-screen multi-window display mode may be composed of 2 or more windows. The video data display method is described under the assumption that the video data to be displayed in the single-screen multi-window display mode has been previously prepared. The video data can be, for example, a motion picture composed of a plurality of frames or still pictures. The still picture can be, for example, an I-frame or a plurality of P-frames accumulated for reconstructing a complete still picture.

Referring to the example shown in FIG. 4, the screen of the single-screen multi-window display mode is composed of five windows, i.e. the first to fifth windows 150a to 150e.

The first window 150a displays the real time video stream, the second window 150b displays the earliest one of the pictures obtained by dividing the captured video data, the third window 150c displays a picture following the earliest picture, the fourth window 150d displays a picture following the picture displayed in the third window 150c, and the fifth window 150e displays a picture following the picture displayed in the fourth window 150d. Each window presents an I-frame or an accumulation of P-frames.

In addition, the multi-window display screen can be configured such that the second to fourth windows 150b to 150d display corresponding still pictures, and the fifth window 150e displays the still pictures of the second to fourth windows in the form of a slide show.

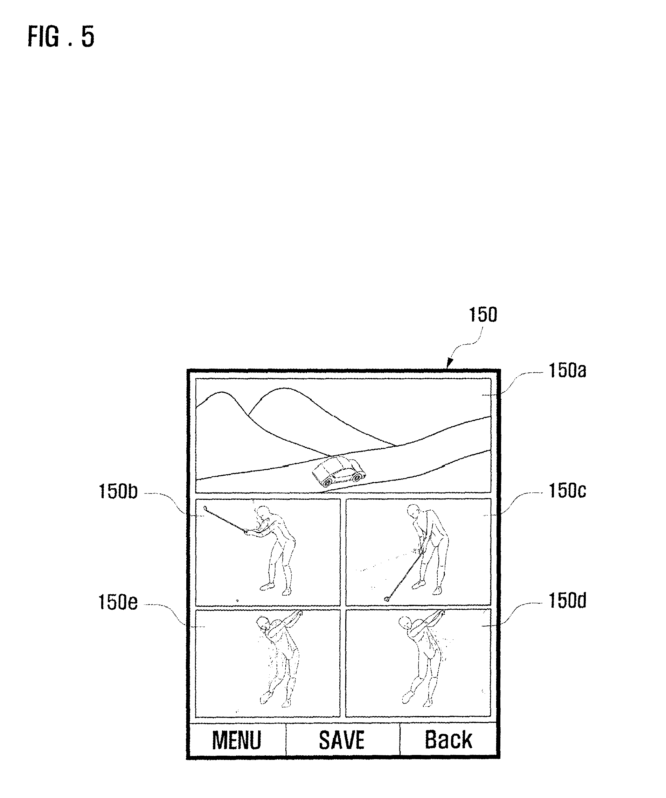

FIG. 5 is a screen image illustrating a single-screen multi-window display mode of a video data display system according to another exemplary embodiment of the present invention. In this exemplary embodiment, the screen is also composed of 5 windows. Of course, the number of the windows can be changed and it is assumed that the video data to be used for the single-screen multi-window display mode is prepared.

Referring to FIG. 5, the screen of the single-screen multi-window display mode is composed of five windows, i.e., the first to fifth windows 150a to 150e.

The first window 150a displays the real time video stream, the second window 150b displays the earliest one of the pictures obtained by dividing the captured video data, the third window 150c displays a picture following the earliest picture, and the fourth window 150d displays a picture following the picture displayed in the third window 150c. Unlike the former example, the pictures displayed in the respective windows are motion pictures produced by dividing the captured video data stream on a broadcast service channel. Meanwhile, the fifth window 150e displays the video data composed of the motion pictures of the second to fourth windows 150b to 150d arranged in temporal order. Operations of the abovestructured mobile terminal are described hereinafter in more detail.

In the following description, a video data display method according to an exemplary embodiment is explained in association with supplementary video data recording options. That is, the video data display method can operate, for example, with the real time video data playback function, the time shift video data playback function, and the recorded video data playback function.

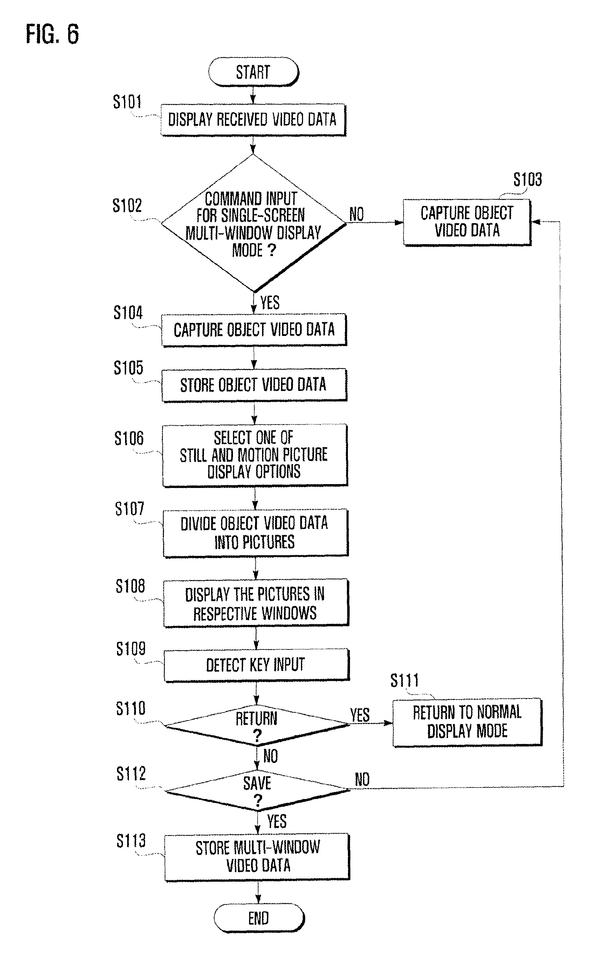

FIG. 6 is a flowchart illustrating a video data display method according to an exemplary embodiment of the present invention. In this embodiment, the video data display method is operated in conjunction with the real time video data playback function and may use, for example, the arrangement of components as shown in FIG. 1.

Referring to FIG. 6, the control unit 100 checks that the mobile terminal operates in a broadcast reception mode and the real time video data of the broadcast stream are displayed on the screen of the display unit 140 (S101). While the real time video data is displayed on the display screen, the control unit 100 detects whether a user command is input for entering the single-screen multi-window display mode (S102). Preferably, a hotkey is provided for generating a single-screen multi-window display mode entry command. If another user command is detected at step S102, the control unit 100 executes the command, e.g. a volume up/down command or a channel switching command (S103).

Still referring to FIG. 6, if a single-screen multi-window display mode entry command is detected, the control unit 100 performs capturing the video data of the broadcast stream during a predetermined capturing interval (S104) and stores the captured video data in the memory unit 160 (S105). The capturing interval can be set in consideration of a display option. That is, the capturing interval can be elongated or shortened in accordance with a number of the windows constituting the screen. Also, the capturing interval can be decided by the user.

After storing the captured video data, the control unit 100 displays a dialog box which enables the user to select one of still picture display and motion picture display options (S106). One of the still and motion picture display options can be set up as a default option. In this case, step S106 can be omitted.

If one of the display options is selected, the control unit 100 divides the video data into predetermined number of pictures (S107). In a case that the still picture display option is selected, the control unit 100 divides the video data into a predetermined number of still pictures and displays the still pictures in the corresponding windows (S108). For example, the control unit 100 extracts the still pictures from the video data by frame and displays the still pictures in the respective windows. Each still picture can be composed of only an I-frame or accumulated P-frames. If the motion picture display option is selected, the control unit 100 divides the video data into a plurality of temporal sections as such number of windows (S107) and displays the temporal sections, i.e. motion pictures, of the video data in the respective windows (S108). At this time, the still or motion pictures are displayed in the temporal order. If the pictures are displayed in four windows, the four pictures derived from the video data are mapped to the first to fourth windows in their temporal order, respectively. In the case that the motion picture display option is selected, the control unit 100 generates the motion pictures to be partially overlapped at their boundaries such that the motion pictures can be seamlessly displayed in the respective windows. One of the windows can be used for displaying the entire video data captured from the broadcast stream. Also, the screen can include an additional window for displaying the video data of the real time broadcast stream.

While displaying the pictures in their respective windows, the control unit 100 monitors a key input through the key input unit 170 (S109) and determines whether a key input for returning to the normal broadcast playback mode (S110). If a key input for returning to the real time broadcast playback mode, the control unit 100 controls such that the display unit 140 displays the video data of the real time broadcast stream in a full-screen view (S111). If the key input detected at step S110 is not for returning to the real time broadcast playback mode, then the control unit 100 determines whether the key input is for storing the multi-window video data (S112). If the key input is for storing the multi-window video data, the control unit 100 stores the video data presented in the single-screen multi-window video playback mode (S113). If the key input is not for returning to the full screen display mode or storing the multi-window video data, the control unit 100 performs a function corresponding to the key input (S103).

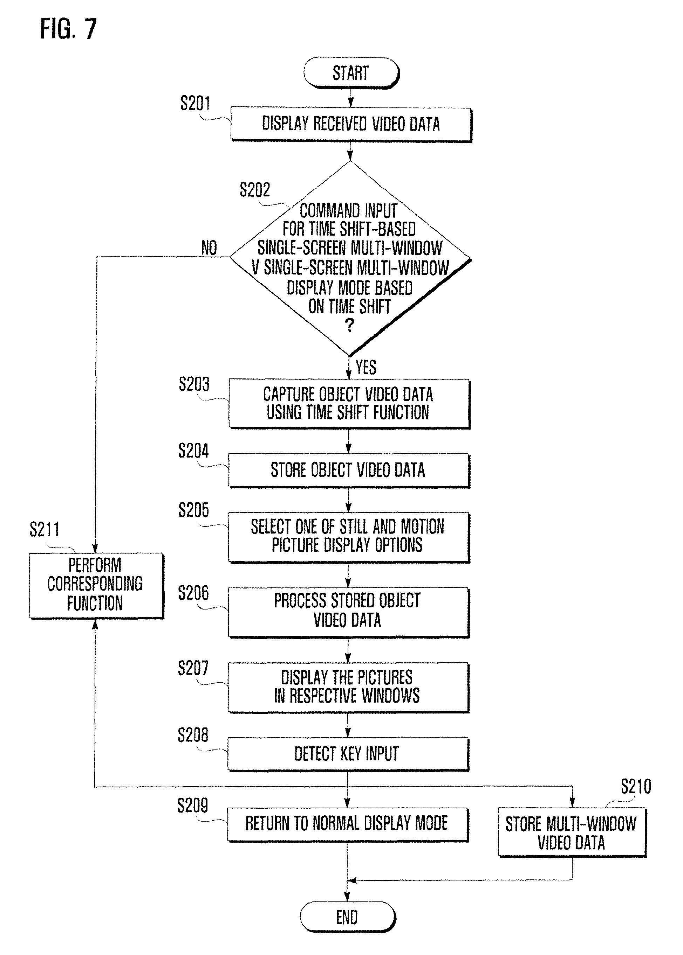

FIG. 7 is a flowchart illustrating a video data display method according to another exemplary embodiment of the present invention. In this example, the video data display method is interoperated with the time shift video data playback function.

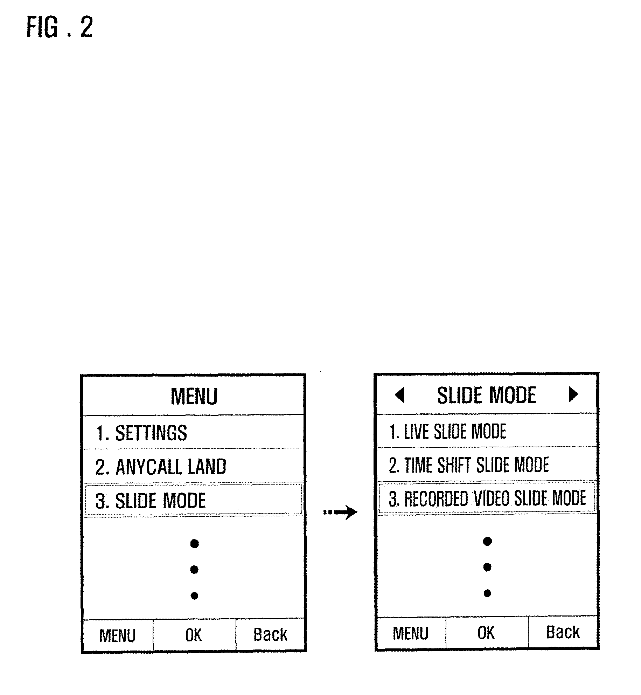

Referring to FIG. 7, the control unit 100 checks that the mobile terminal operates in the broadcast reception mode and the real time video data of the broadcast stream are displayed on the screen of the display unit 140 (S201). While the real time video data is displayed on the screen, the control unit 100 detects whether a user command is input for entering a time-shift video data playback function-based single-screen multi-window display mode (S202). The time-shift video data playback function can be set on a menu screen (see FIG. 2) or is set as a default option for the single-screen multi-window video playback mode. If the time shift video data playback function is not activated, the control unit 100 controls the mobile terminal to operate in the single-screen multi-window display mode is conjunction with the real time video data playback function. Preferably, a hotkey is provided for generating a signal-screen multi-window display mode entry command. In this case, the control unit 100 starts recording the video data of the real time broadcast stream in response to the input of the hotkey. If another user command is detected at step S202, the control unit 100 executes the command performing a corresponding function, e.g. a volume up/down command or a channel switching command (S211).

If a user command is input for entering a time-shift video data playback function-based single-screen multi-window display mode, the control unit 100 controls the start of recording of the video data of the real time broadcast stream (S203), and stores the video data in a time-shift window such that the user can freely select a playback position in the time shift window (S204). In this exemplary embodiment, the video data recorded by the time-shift function can be used for single-screen multi window video playback mode.

After storing the captured video data at (S204), the control unit 100 displays a dialog box which enables the user to select one of still picture display and motion picture display options (S205). One of the still and motion picture display options can be set up as a default option. If a default is set, then step S205 can be omitted.

If one of the display options is selected, the control unit 100 divides the video data sections in response to a user command (S206). In a case where the still picture display option is selected, the control unit 100 divides the video data into a plurality of still pictures and displays the still pictures in the corresponding windows (S207). For example, the control unit 100 extracts the still pictures from the video data by frame and displays the still pictures in the respective windows. Each still picture can be composed of only an I-frame or accumulated P-frames. If the motion picture display option is selected, the control unit 100 divides the video data into a plurality of temporal sections as such number of windows (S206) and displays the temporal sections, i.e. motion pictures, of the video data in the respective windows (S207). At this time, the still or motion pictures are displayed in the temporal order. If the pictures are displayed, for example, in four windows, the four pictures derived from the video data are mapped to the first to fourth windows in their temporal order, respectively. In the case that the motion picture display option is selected, the control unit 100 generates the motion pictures to be partially overlapped at their boundaries such that the motion pictures can be seamlessly displayed in the respective windows. One of the windows can be used for displaying the entire video data captured from the broadcast stream. Also, the screen may include an additional window for displaying the video data of the real time broadcast stream.

While displaying the pictures in their respective windows, the control unit 100 monitors a key input through the key input unit 170 (S208). If a key input for returning to the normal broadcast playback mode is detected, the control unit 100 controls the display unit 140 to display the video data of the real time broadcast stream in a full screen view (S209). If a key input for storing the multi-window video data, the control unit 100 stores the video data presented in the single-screen multi-window video playback mode (S210). If the key input detected at step S208 is not for returning to the real time broadcast playback mode or for storing the multi-window video data, the control unit 100 performs a function corresponding to the key input (S211).

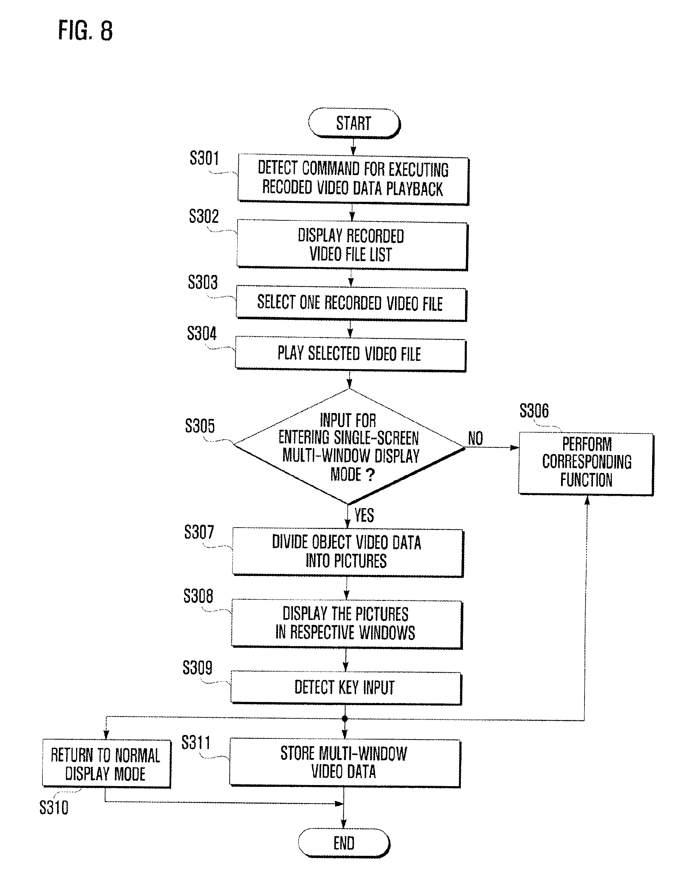

FIG. 8 is a flowchart illustrating a video data display method according to another exemplary embodiment of the present invention. In this example, the video data display method is operated in conjunction with the recorded video data playback function.

Referring to FIG. 8, the control unit 100 detects a command for executing the recorded video data playback function (S301). The recorded video data playback function can be activated by checking an option box provided on a menu screen. Upon detecting the recorded video data playback function execution command, the control unit 100 controls to display a recorded video file list showing previously recorded video data files (S302). If no previously recorded video data file exists, the control unit 100 controls the display to provide notification that no available video data file was found.

Next, the control unit 100 detects a selection of a recorded video data file from the recorded video file list (S303) and starts playback of the selected video data file such that the video data are displayed on the screen (S304). While displaying the video data, the control unit determines whether a user command is input for entering the single-screen multi-window display mode (S305). If another user command is detected at step S305, the control unit executes the command, e.g. a volume up/down command or a channel switching command (S306).

If a single-screen multi-window display mode entry command is detected, the control unit 100 controls the division of the video data into a predetermined number of pictures (S307) and displays the pictures in the corresponding windows (S308). While displaying the pictures in the screen, the control unit 100 detects a key input through the key input unit 170 (S309). If the key input is for returning to the full screen display mode, the control unit 100 causes the recorded video data to be displayed in the full screen view (S310). If the key input is for storing the multi-window video data, the control unit 100 causes the storage of the video data presented in the single-screen multi-window video playback mode (S311). If the key input is not for returning to the full screen display mode or storing the multi-window video data, the control unit 100 performs a function corresponding to the key input, the control unit 100 performs a function corresponding to the key input (S306).

As described above, the video data display system and method of the present invention enables displaying video data that was previously recorded or is being played on a single screen in a multi-window format in the form of a slide show. While displaying the video data in a real time broadcast video data-based single-screen multi-window display mode, the audio data is synchronized only with the video data displayed in the window assigned for displaying the video data of the real time broadcast stream, or the video data before dividing into the pictures.

In the case where the recorded video data is displayed in single-screen multi-window display mode, the audio data is synchronized only with the video data displayed in the window assigned for the video data before dividing into the pictures.

Although the video data display system and method are described with a mobile terminal having a display that enables different pictures derived from a single video data in respective windows. However, the present invention is not limited thereto. For example, the video data display system and method can be implemented with a device having multiple display screens such that the pictures derived from one video data are displayed in different display screens at the same time. In a case of a device provided with two display screens, the video data display system and method can be implemented such that one of the display screen presents the recorded video data and the other presents the pictures derived from the video data in the form of slide show.

Although exemplary embodiments of the present invention have been described in detail hereinabove, it should be clearly understood that many variations and/or modifications of the basic inventive concepts herein taught which may appear to those skilled in the present art will still fall within the spirit and scope of the present invention, as defined in the appended claims.

As described above, the video data display system and method for a mobile terminal according to the present invention are advantageous in terms of utilization of the video data.

## Claims

1. A video data display method comprising:
capturing an object video data of an audiovisual data stream;
dividing the object video data into a predetermined number of pictures; and
providing the predetermined number of pictures to a display capable of displaying the pictures in different windows.

2. The video data display method of claim 1, wherein the object video data are divided by frame.

3. The video data display method of claim 2, wherein the pictures comprise Intra (I)-frames or accumulated Predicitve (P)-frames.

4. The video data display method of claim 1, wherein each picture is a motion picture having a predetermined playback time.

5. The video data display method of claim 4, wherein the pictures are partially overlapped at dividing boundaries.

6. The video data display method of claim 4, wherein the pictures are designated to corresponding windows in a temporal order.

7. The video data display method of claim 1, wherein the pictures are designated to corresponding windows in a temporal order.

8. The video data display method of claim 1, wherein the pictures are displayed as a slide show.

9. The video data display method of claim 6, further comprising displaying video data of the audiovisual data stream in one of the windows.

10. The video data display method of claim 9, further comprising outputting audio data in synchronization with the video data.

11. The video data display method of claim 6, further comprising displaying the object video data before being divided into the pictures in one of the windows.

12. The video data display method of claim 1, wherein capturing an object video data comprises:
determining whether a command for capturing an object video data has been detected; and
beginning capturing the object video data upon determining the command for capturing object video data has been detected.

13. The video data display method of claim 12, wherein the audiovisual data stream comprises a broadcast stream.

14. The video data display method of claim 13, further comprising storing the object video data.

15. The video data display method of claim 1, wherein capturing an object video data comprises:
determining whether a command for capturing a object video data has been detected; and
capturing the object video data from a video stream recorded by a time-shift function in a predetermined time interval upon detecting the command.

16. The video data display method of claim 1, wherein the audiovisual data stream is a data recorded by a time-shift function.

17. A video data display system for a mobile terminal, comprising:
a display unit having a screen;
a control unit for capturing an object video data from an audiovisual data stream, dividing the object video data into a predetermined number of pictures, and displaying the pictures in different windows of the screen; and
a key input unit for generating a command for capturing the object video data.

18. The video data display system of claim 17, further comprising a radio frequency module for receiving the audiovisual data.

19. The video data display system of claim 18, further comprising a memory for storing the object video data under the control of the control unit.

20. The video data display system of claim 17, wherein the display has a plurality of display modes, and further comprising a hot key function for switching between display modes.

21. The video data display system of claim 20, wherein one of the plurality of display modes comprises a single-screen multi-window display mode.

22. The video data display system of claim 17, wherein the pictures are still pictures represented by Intra (I)-frames or accumulated Predicitive (P)-frames.

23. The video data display system of claim 17, wherein the pictures are motion pictures each having a predetermined playback time.

24. A mobile terminal comprising:
a capturer for capturing an object video data from a video stream displaying on a screen;
a divider for dividing the object video data into a predetermined number of pictures; and
display for displaying the pictures in different windows provided on a display screen of the mobile terminal.
